# EUROPÄISCHE PATENTANMELDUNG

(11) **EP 2 517 771 A1**
(43) Veröffentlichungstag der Anmeldung: **31.10.2012**
(21) Anmeldenummer: 11003527.6
(22) Anmeldetag: 29.04.2011
(51) Int. Cl.: B01D 53/50, F23J 15/04, B01D 53/78

(54) **Waschturm**

(71) Anmelder: Hamon Enviroserv GmbH, 45136 Essen (DE)
(72) Erfinder: Greimann, Joachim, 45277 Essen (DE); Bausch, Claudia, 45136 Essen (DE)
(74) Vertreter: Krenzel, Joachim

(57) **Zusammenfassung**

Die vorliegende Erfindung betrifft einen Waschturm für eine Rauchgasreinigungsanlage, mit einem Rauchgaseinlass, einem Reaktionskanal zur Reaktion eines Agens mit einem den Reaktionskanal durchströmenden Rauchgas, einen den Rauchgaseinlass strömungstechnisch mit dem Reaktionskanal verbindenden Zuführkanal zum Zuführen des unbehandelten Rauchgases zum Reaktionskanal sowie einem Rauchgasauslass. Darüber hinaus betrifft die Erfindung eine Rauchgasreinigungsanlage mit einem Waschturm.

Der Erfindung liegt die **Aufgabe** zugrunde, einen Waschturm zu schaffen, der auf einfache Weise mit herkömmlichen bautechnischen Mitteln am Einsatzort erstellt werden kann und zugleich für hohe Anlagenleistungen geeignet ist.

Als **Lösung** schlägt die Erfindung einen Waschturm der gattungsgemäßen Art vor, der sich dadurch auszeichnet, dass der Reaktionskanal und der Zuführkanal aneinandergrenzend parallel zueinander ausgerichtet sind, wobei der Reaktionskanal und der Zuführkanal strömungstechnisch an einem gemeinsamen Ende über einen Umlenkbereich zur Umlenkung der Strömungsrichtung des Rauchgases miteinander verbunden sind, wobei der Reaktionskanal und der Zuführkanal vom Rauchgas im Wesentlichen entgegengesetzt durchströmt sind.

## Beschreibung

Die vorliegende Erfindung betrifft einen Waschturm für eine Rauchgasreinigungsanlage, mit einem Rauchgaseinlass, einem Reaktionskanal zur Reaktion eines Agens mit einem den Reaktionskanal durchströmenden Rauchgas, einen den Rauchgaseinlass strömungstechnisch mit dem Reaktionskanal verbindenden Zuführkanal zum Zuführen des unbehandelten Rauchgases zum Reaktionskanal sowie einem Rauchgasauslass. Darüber hinaus betrifft die Erfindung eine Rauchgasreinigungsanlage mit einem Waschturm.

Waschtürme der gattungsgemäßen Art werden zur Reinigung von Rauchgas eingesetzt, welches bei der Verbrennung von insbesondere fossilen Brennstoffen und dergleichen anfällt. Derartiges Rauchgas enthält unbehandelt eine große Anzahl und Menge an Schadstoffen wie Stickoxide, Schwefeloxide, giftige Stäube und dergleichen. Aufgrund der Aggressivität solcher Stoffe gegenüber der Umwelt soll der Ausstoß solcher Stoffe möglichst begrenzt sein. Die Emission solcher Stoffe unterliegt deshalb gesetzlichen Grenzwerten, die es erforderlich machen, das Rauchgas vor Freisetzung in die Atmosphäre so zu behandeln, dass die vorgeschriebenen Grenzwerte eingehalten werden. Hierzu werden Rauchgasreinigungsanlagen eingesetzt.

Rauchgasreinigungsanlagen sind bereits bekannt, beispielsweise bei Kraftwerken, chemischen Anlagen und dergleichen, in denen aus fossilen Brennstoffen aber auch aus anderen Brennstoffen Energie erzeugt wird, beispielsweise elektrische Energie. Solche Kraftwerke sind beispielsweise Kohlekraftwerke, Ölkraftwerke, Gaskraftwerke oder dergleichen.

Ein wesentliches Teil der Rauchgasreinigungsanlage ist ein Waschturm, in den das Rauchgas in der Regel in einem unteren Bereich, und zwar dem Rauchgaseinlass eingeleitet wird. Dieses durchströmt einen Reaktionskanal des Waschturms von unten nach oben und verlässt ihn durch eine im oberen Bereich des Waschturms angeordnete Auslassöffnung, den Rauchgasauslass. Zwischen dem Rauchgaseinlass und dem Rauchgasauslass ist im Waschturm der Reaktionskanal mit einem Reaktionsbereich vorgesehen, in welchem Reaktionsbereich mittels entsprechender Düsenanordnungen ein in der Regel flüssiges Agens eingesprüht, insbesondere eingedüst wird. Das Agens wird häufig auch als Reinigungsflüssigkeit, Waschflüssigkeit oder dergleichen bezeichnet. Das in dem Reaktionsbereich eingedüste Agens reagiert mit dem Rauchgas, wobei giftige Stoffe gelöst beziehungsweise neutralisiert und mit dem Agens mitgeführt werden. Das Agens fällt aufgrund der Gravitation entgegen der Strömungsrichtung des Rauchgases in einen unterhalb der Einführöffnung für das Rauchgas vorgesehenen Agensvorlage, gelegentlich auch Sumpf genannt, des Waschturms. Von hier aus wird das Agens in der Regel zumindest teilweise wieder verwendet und erneut eingedüst und teilweise einer Entsorgung zugeführt. Entsprechend dem zu entsorgenden Anteil des Agens wird ein frisches Agens zugefügt.

In der Regel umfasst das Agens neben Wasser vorzugsweise Stoffe mit Alkali- und/oder Erdalkalianteilen, die mit den im Rauchgas vorhandenen Schadstoffen reagieren. Es wird insbesondere Calciumoxid, Calciumhydroxid, Calciumhydrodgencarbonat, Calciumcarbonat, Mischungen hiervon und/oder dergleichen verwendet. Darüber hinaus besteht die Möglichkeit, Seewasser zumindest teilweise als Agens zu nutzen, da Seewasser bereits relevante Mengen an alkalischen Stoffen, insbesondere Hydrogencarbonat enthält.

Eine gattungsgemäße Rauchgasreinigungsanlage sowie ein Waschturm sind in der EP 1 967 253 A1 offenbart, deren Offenbarungsgehaft vom Inhalt dieser Patentanmeldung umfasst sein soll. Die in der EP 1 967 253 A1 offenbarte Rauchgasreinigungsanlage sowie der darin offenbarte Waschturm haben sich in der Praxis bewährt.

Es hat sich jedoch gezeigt, dass der Aufbau und die Aufstellung eines Waschturms sehr aufwändig sind. Üblicherweise wird nämlich der Waschturm nicht vollständig am Aufstellungsort hergestellt, sondern es müssen seine an entfemter Stelle hergestellten Einzelteile zum Aufstellungsort transportiert und zusammengefügt werden. Dies begrenzt die Größe und Leistung des Wachsturms. Bei großen Anlagenleistungen behilft sich der Stand der Technik damit, mehrere kleinere Waschtürme im Parallelbetrieb zu betreiben. Bezüglich des zu betreibenden Aufwands der Erstellung und der Wartung sind solche Anlagenkonstellationen ungünstig. Die bisher bekannten Anlagenkonzepte eignen sich darüber hinaus wenig zur vor Ort Erstellung und sind im Übrigen wenig geeignet für besonders große Anlagenleistungen. So erweist es sich zum Beispiel als nachteilig, einen Waschturm mit einem großen Einlassquerschnitt im unteren Bereich zu versehen, da hierdurch statische Stabilitätsprobleme generiert werden können. Deshalb wurde von solchen Lösungen bislang abgesehen.

Ein weiterer Stand der Technik nämlich, die EP 2 258 462 A1 offenbart einen Waschturm mit zwei vertikal ausgerichteten Reaktionskanälen, die vom Rauchgas im Gegenstrom durchströmt werden sollen. Da in beiden Reaktionskanälen eine Waschflüssigkeit in das Rauchgas eingesprüht wird, ist die Reinigungswirkung in dem Reaktionskanal, in dem das Rauchgas im Gleichstrom mit der Waschflüssigkeit strömt, sehr gering. Ein hoher Installations- und Wartungsaufwand wird für die geringe Reinigungswirkung in Kauf genommen.

Der Erfindung liegt deshalb die **Aufgabe** zugrunde, einen Waschturm zu schaffen, der auf einfache Weise mit herkömmlichen bautechnischen Mitteln am Einsatzort erstellt werden kann und zugleich für hohe Anlagenleistungen geeignet ist.

Als **Lösung** schlägt die Erfindung einen Waschturm der gattungsgemäßen Art vor, der sich dadurch auszeichnet, dass der Reaktionskanal und der Zuführkanal aneinandergrenzend parallel zueinander ausgerichtet sind, wobei der Reaktionskanal und der Zuführkanal strömungstechnisch an einem gemeinsamen Ende über einen Umlenkbereich zur Umlenkung der Strömungsrichtung des Rauchgases miteinander verbunden sind, wobei der Reaktionskanal und der Zuführkanal vom Rauchgas im Wesentlichen entgegengesetzt durchströmt sind.

Dadurch dass der Reaktionskanal und der Zuführkanal vorzugsweise direkt aneinandergrenzend parallel zueinander ausgerichtet sind, können sie vorteilhaft als eine integrale Baugruppe beziehungsweise Baueinheit hergestellt werden. Dadurch ist es möglich, den Waschturm als Gebäude in konventioneller Bauart zu errichten, wobei der Reaktionskanal und der Zuführkanal lediglich durch eine Trennwand innerhalb des Gebäudes voneinander getrennt sind. Die Trennwand kann als Leichtbauteil ausgebildet sein. Sie kann beispielsweise nach Gebäudeerstellung eingefügt sein. Dadurch dass an einem Ende des Waschturms der Zuführkanal und der Reaktionskanal miteinander strömungstechnisch gekoppelt sind werden die beiden Kanäle entgegengesetzt vom Rauchgas durchströmt.

Anders als bei der EP 2 258 462 A1 erfolgt bei der Erfindung die Behandlung des Rauchgases lediglich in einem einzigen Reaktionskanal. Im Zuführkanal findet keine Behandlung des Rauchgases statt. Dadurch kann der Zuführkanal kostengünstig gestaltet und auf einfache Weise in die beispielsweise vorhandene Konstruktion des Waschturms aufgenommen werden. Aufwändige Wartungsarbeiten des Zuführkanals können vermieden werden.

Bei der Erfindung wird vielmehr der ohnehin erforderliche Zuführkanal in den Waschturm integriert. Dadurch entsteht ohne großen zusätzlichen Aufwand eine kompakte Baueinheit für einen Waschturm, der sich durch einfache Wartung und Installation auszeichnet.

Besonders vorteilhaft erweist sich diese Ausgestaltung dann, wenn der Rauchgaseinlass und der Rauchgasauslass in einem oberen Bereich des Waschturms angeordnet sind. Dadurch ist es nämlich möglich, auf Zuführungen beziehungsweise Öffnungen im unteren Bereich des Waschturms gänzlich zu verzichten und dadurch eine hohe Stabilität des den Waschturm bildenden Gebäudes zu erreichen. Diese Ausgestaltung ermöglicht es deshalb nicht nur den Waschturm mit herkömmlichen bautechnischen Mitteln zu erstellen, sondern er kann darüber hinaus auch noch in quasi beliebiger Größe am Aufstellungsort angepasst an die erforderliche Anlagenleistung, insbesondere auch individuell erstellt werden. So ist es beispielsweise möglich, den Waschturm als Gebäude in herkömmlicher Weise aus Beton zu erstellen. Lediglich durch eine Trennwand innerhalb des Gebäudes werden der Reaktionskanal und der Zuführkanal getrennt. Die Trennwand kann als Leichtbauwand ausgebildet sein, die insbesondere nachträglich in das Gebäude eingezogen werden kann. Darüber hinaus erlaubt es die Erfindung, Strömungsquerschnitte des Zuführkanals und des Reaktionskanals entsprechend der Erfordernisse auf einfache Weise variabel zu wählen. Besonders vorteilhaft kann vorgesehen sein, dass die Trennwand verfahrbar ist, so dass Strömungsquerschnitte bedarfsweise variiert werden können.

Insbesondere wenn Rauchgaseinlass und Rauchgasauslass im oberen Bereich des Waschturms angeordnet sind, kann eine stabile Gebäudekonstruktion erreicht werden, da die tragenden Gebäudewände im Wesentlichen ohne große Durchbrüche auf einem Fundament aufgestellt werden können. Dabei kommt es hinsichtlich der Stabilität auf die Querschnittsform des Gebäudes im Wesentlichen nicht an. Aus bautechnischer Sicht kann jedoch eine rechteckige Grundfläche vorteilhaft sein, so dass beispielsweise ein im Wesentlichen quaderförmiges Gebäude als Waschturm erstellt werden kann. Daneben kann das Gebäude natürlich auch mit einer kreisförmigen oder elliptischen Grundfläche versehen sein. Die Trennung kann auch hier durch eine nachträglich eingebaute Trennwand realisiert sein, wodurch strömungsungünstige Eckbereiche im Waschturm reduziert werden können. Natürlich kann die Trennwand auch derart ausgestaltet sein, dass nicht eckige Strömungsquerschnitte im Zuführkanal und im Strömungskanal zugleich realisiert werden können. Die Erfindung erlaubt aufgrund ihres Konzepts hierdurch eine Velzahl von Gestaltungsmöglichkeiten.

Der Reaktionskanal weist üblicherweise den Reaktionsbereich auf. In diesem Bereich befindet sich eine Zuführung für das Agens, so dass das Agens im Reaktionsbereich mit dem Rauchgas in Wechselwirkung treten kann. Damit lässt sich die gewünschte Reinigungswirkung erzielen. In der Regel wird der Reaktionskanal im Wesentlichen vertikal ausgerichtet sein, wobei das Rauchgas den Reaktionskanal im Wesentlichen entgegen der Gravitation durchströmt. Vorzugsweise im oberen Bereich des Reaktionskanals wird das Agens in das Rauchgas eingebracht, welches aufgrund der Gravitation das Rauchgas entgegen der Strömungsrichtung des Rauchgases durchströmt. Das Agens wird in üblicherweise nach Durchströmen des Rauchgases im unteren Bereich des Waschturms in einer Agensvorlage gesammelt. Von hier aus kann es erneut in das Rauchgas eingebracht oder auch beispielsweise zumindest teilweise entsorgt werden.

Gemäß der Erfindung dient der Zuführkanal somit dazu, den Rauchgaseinlass mit einer Zuführöffnung des Reaktionskanals zu verbinden. Das Rauchgas selbst wird im Zuführkanal nicht behandelt, durchströmt ihn hinsichtlich des Schadstoffgehalts im Wesentlichen unverändert. Mittels des Zuführkanals kann der Rauchgaseinlass in einem gebäudetechnisch günstigen Bereich angeordnet werden.

Dadurch, dass im Zuführkanal keine Behandlung des Rauchgases erfolgt sondern das Rauchgas im Wesentlichen lediglich unverändert geführt wird, kann der Zuführkanal an die rein strömungstechnischen Erfordernisse angepasst ausgebildet sein. Beispielsweise kann der Zuführkanal einen kleineren Strömungsquerschnitt als der Reaktionskanal aufweisen. Die eigentliche Behandlung des Rauchgases erfolgt dagegen im Reaktionskanal, und hier insbesondere im Reaktionsbereich, wie oben beschrieben. Die spezielle Ausführung des Reaktionskanals mit dem Zuführkanal als vorzugsweise integrale Baueinheit ermöglicht es somit, den Erfindungsgedanken zu realisieren und die gewünschten Vorteile zu erreichen. Ein kompakter, leistungsstarker Waschturm kann erreicht werden. Die Erfindung ermöglicht es darüber hinaus, auch nachträglich Strömungsquerschnitte der Kanäle, insbesondere des Zuführkanals und/oder des Reaktionskanals, zu verändern. Hierzu können beispielsweise Trennwände verschoben, zusätzliche Trennwände in den jeweiligen Kanal eingesetzt oder entfernt werden. Dies erlaubt es, den Waschturm mit einfachen Mitteln an unterschiedliche Anlagenleistungen anzupassen, so dass immer ein weitgehend optimaler Betrieb erreicht werden kann.

Eine Weiterbildung der Erfindung sieht vor, dass im Umlenkbereich der strömungstechnischen Verbindung eine Agensvorlage angeordnet ist. Die Agensvorlage kann der beim Stand der Technik übliche Sumpf zum Sammeln des Agens sein. Die Agensvorlage kann auch die Verbindung zwischen dem Zuführkanal und dem Reaktionskanal herstellen, beispielsweise indem die Agensvorlage zusammen mit dem Umlenkbereich ausgebildet ist. Auf diese Weise kann eine separate Verbindung zwischen dem Zuführkanal und dem Reaktionskanal eingespart oder reduziert werden. Dies vereinfacht die Konstruktion und erlaubt es, die Statik des Gebäudes hinsichtlich der Stabilität weiter zu verbessern.

Die Agensvorlage kann kanalartig ausgebildet sein. Dadurch ist es möglich, dass die Agensvorlage vom Agens durchströmt werden kann. Vorteilhaft ist dies beispielsweise, wenn als Agens Seewasser genutzt wird, dass den Waschturm durchströmen soll.

Eine weitere Ausgestaltung sieht vor, dass der Reaktionskanal und der Zuführkanal im Wesentlichen vertikal ausgerichtet sind. Dies erlaubt es, die Erfindung auch im Zusammenhang mit bekannten Verfahrungsführungen zu nutzen. Je nach Anwendungsfall kann jedoch auch abweichend eine nicht vertikale Führung, beispielsweise eine schräge Führung oder dergleichen vorgesehen sein.

Darüber hinaus erweist sich die Erfindung als besonders vorteilhaft, wenn der Rauchgaseinlass und der Rauchgasauslass in einem oberen Bereich des Waschturms angeordnet sind. Dies ermöglicht es nicht nur, die erforderlichen Öffnungen des Waschturms in einem vorzugsweise Endbereich des Waschturms zusammenzuführen, sondern es können darüber hinaus auch bautechnische Vereinfachungen erreicht werden, weil Anschlussbereiche leichter zugänglich gemacht und einfacher konstruiert sein können. Darüber hinaus wird die Leitungsführung für das Rauchgas zum Anschluss an den Waschturm vereinfacht. Besonders vorteilhaft erweist sich dies dann, wenn Notventile zwischen Rauchgaseinlass und Rauchgasauslass vorzusehen sind, um beispielsweise das Rauchgas in einem Störfall des Waschturms an diesem vorbeileiten zu können. Eine besonders einfache Konstruktion kann für diesen Fall erreicht werden, insbesondere wenn der Rauchgaseinlass und der Rauchgasauslass nebeneinander am Waschturm angeordnet sind.

Eine Weiterbildung sieht vor, dass ein Strömungsquerschnitt des Zuführkanals im Wesentlichen einem Strömungsquerschnitt des Reaktionskanals entspricht. Auf diese Weise kann eine besonders einfache Waschturmkonstruktion erreicht werden.

Darüber hinaus wird vorgeschlagen, dass der Waschturm eine Zuführeinheit zur Zuführung des Agens zum Reaktionskanal aufweist, die eine außerhalb der Kanäle angeordnete Zuführleitung für das Agens aufweist. Hierdurch wird erreicht, dass die Zuführleitungen für das Agens aus dem Bereich des Rauchgases entfernt angeordnet sind. Dadurch sind die Zuführleitungen zum einen für Wartungszwecke sehr einfach zugänglich, ohne dass der Waschturm außer Betrieb gesetzt werden müsste. Darüber hinaus ermöglicht diese Ausgestaltung eine einfache Anpassung des Waschturms an unterschiedliche Leistungen, so dass - je nach Bedarf hinsichtlich der Reinigungsleistung - zusätzliche Zuführleitungen vorgesehen sein können. Weiterhin kann eine einfache Erstellung des Gebäudes verbessert werden. Besonders vorteilhaft erweist es sich, wenn die Zuführeinheit eine Eindüseinrichtung aufweist, die im Reaktionskanal angeordnet und an die Zuführleitung angeschlossen ist. Vorzugsweise kann nämlich die Eindüseinrichtung zu Wartungszwecken seitlich aus dem Waschturm herausgezogen werden. Hierdurch lässt sich ebenfalls die Wartung und die Montage vereinfachen.

Darüber hinaus kann im Bereich des Rauchgaseinlasses und/oder des Rauchgasauslasses ein Wärmetauscher angeordnet sein. Der Wärmetauscher kann dazu dienen, im Bereich des Rauchgaseinlasses dem Rauchgas Wärme zu entziehen.

Hierdurch kann eine verbesserte Reaktion des Rauchgases im Reaktionsbereich mit dem Agens erreicht werden, wobei das Agens durch das Rauchgas weniger stark erwärmt wird. Dies ist aus Gründen der Verfahrensführung vorteilhaft. Ergänzend oder alternativ kann vorgesehen sein, dass am Ende des Reaktionskanals, insbesondere im Bereich des Rauchgasauslasses ein Wärmetauscher angeordnet sein kann. Je nach Verfahrensführung kann vorgesehen sein, dass dem Rauchgas weitere Restwärme entzogen wird. Darüber hinaus kann aber auch alternativ vorgesehen sein, dass dem Rauchgas Wärme hinzugeführt wird, um beispielsweise eine Kaminwirkung in einem folgenden Schritt bei Abführung des Rauchgases durch einen Kamin zu verbessern. Das Vorsehen eines Wärmetauschers ermöglicht es somit, eine Wärmesteuerung des Rauchgases vorzunehmen. Insbesondere kann vorgesehen sein, dass die Wärmesteuerung des Rauchgases von atmosphärischen Bedingungen abhängig gemacht wird, so dass eine möglichst störungsfreie Abführung des Rauchgases erreicht werden kann. So kann beispielsweise vorgesehen sein, dass dem Rauchgas im Bereich des Rauchgaseinlasses Wärme entzogen wird, die mittels eines zweiten Wärmetauschers im Bereich des Rauchgasauslasses dem Rauchgas wieder zugeführt wird.

Darüber hinaus kann natürlich der Wärmetauscher auch an die Zuführleitung angeschlossen sein. Insbesondere im Falle der außerhalb des Gebäudes angeordneten Zuführleitung ermöglicht es diese Ausgestaltung, dem Agens je nach Bedarf Wärme zuzuführen oder zu entziehen, um eine Verfahrensführung zu verbessern. Beispielsweise kann vorgesehen sein, dass das Agens bei sehr niedrigen Außentemperaturen mittels des Wärmetauschers beheizt wird.

Vorzugsweise ist der Waschturm, insbesondere sein Gebäude aus Beton, vorzugsweise Stahlbeton gebildet. Dies erlaubt es, den Waschturm, beziehungsweise sein Gebäude mit herkömmlichen Methoden der Gebäudeerstellung herzustellen. Auf einfache Weise kann ein stabiler Waschturm erstellt werden. Darüber hinaus kann der Waschturm hinsichtlich seiner Abmessungen und Leistung beliebig angepasst werden. Eine Möglichkeit der Erstellung des Waschturms am Einsatzort kann Kosten und Aufwand reduzieren.

Weiterhin können der Waschturm, der Zuführkanal und/oder der Reaktionskanal einen rechteckigen Querschnitt aufweisen. Dadurch lässt sich eine weitere Vereinfachung der Konstruktion des Waschturms und der Möglichkeit, ihn an eine vorgegebene Leistung anzupassen, erreichen.

Mit der Erfindung wird ferner eine Rauchgasreinigungsanlage mit einem Waschturm der Erfindung vorgeschlagen. Die Erfindung ermöglicht es, die Rauchgasanlage hinsichtlich ihres Aufbaus zu vereinfachen und zu kompaktieren. Hierzu trägt insbesondere bei, dass der Waschturm aufgrund der erfindungsgemäßen Ausgestaltung erheblich kompakter und kleiner ausgebildet sein kann, als es nach dem Stand der Technik möglich ist.

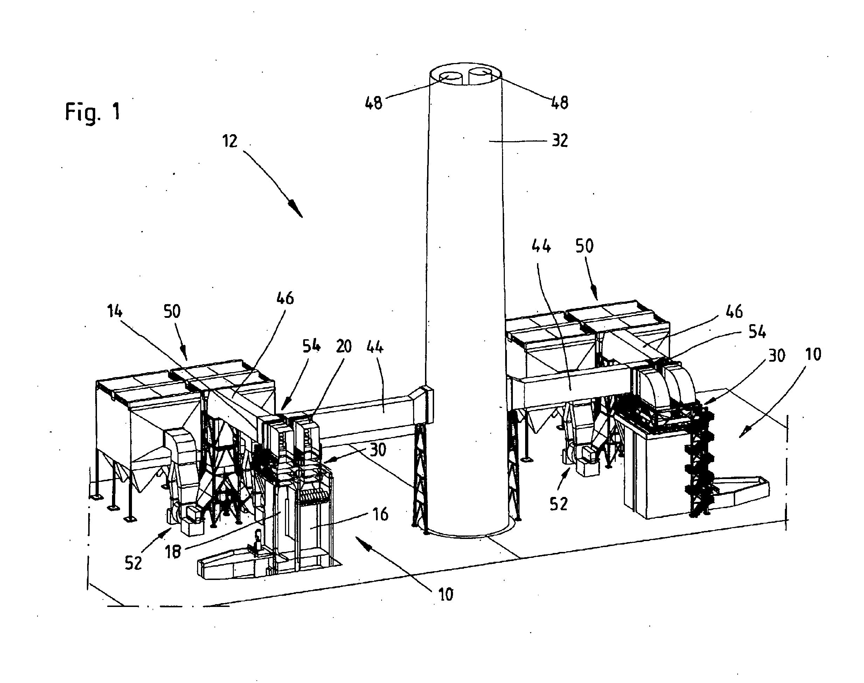

Weitere Merkmale und Vorteile können der folgenden Beschreibung eines Ausführungsbeispiels entnommen werden. Im Wesentlichen gleichbleibende Bauteile sind mit gleichen Bezugszeichen bezeichnet. Ferner wird bezüglich gleicher Merkmale und Funktionen auf die Beschreibung zum Ausführungsbeispiel gemäß Fig. 1 verwiesen. Die Zeichnungen sind Schemazeichnungen und dienen nur der Erläuterung des folgenden Ausführungsbeispiels.

Es zeigen:
- Fig. 1: eine Rauchgasreinigungsanlage mit zwei Waschtürmen gemäß der Erfindung und
- Fig. 2: einen Schnitt durch einen Waschturm der Rauchgasreinigungsanlage gemäß Fig. 1

Fig. 1 zeigt die Gesamtansicht einer Rauchgasreinigungsanlage 12 mit zwei Waschtürmen 10 gemäß der Erfindung. Der Übersichtlichkeit halber sind nur die für die Erfindung maßgeblichen Teile der Rauchgasreinigungsanlage 12 dargestellt und bezeichnet.

Das Rauchgas wird in einer nicht dargestellten Verbrennungsanlage für fossile Brennstoffe erzeugt und über nicht dargestellte Leitungen einer Vorreinigung 50 zugeführt. Die Vorreinigung 50 kann eine elektrostatische Schadstoffabscheidung enthalten. Die Rauchgasreinigungsanlage 12 ist in der in Fig. 1 dargestellten Version zweiteilig aufgebaut, das heißt, es liegen zwei im Wesentlichen identische Kanäle vor, so dass Redundanz bezüglich der Reinigungsfunktion besteht. Die beiden Anlagenteile sind im Wesentlichen identisch aufgebaut, so dass im weiteren Verlauf die Beschreibung auf einen Anlagenteil beschränkt ist.

Von der Vorreinigung 50 gelangt das Rauchgas über einen nicht bezeichneten Kanal zu einer Fördereinrichtung 52, mit der das Rauchgas über einen Verbindungskanal 46 dem Rauchgaseinlass 14 des Waschturms 10 zugeführt wird.

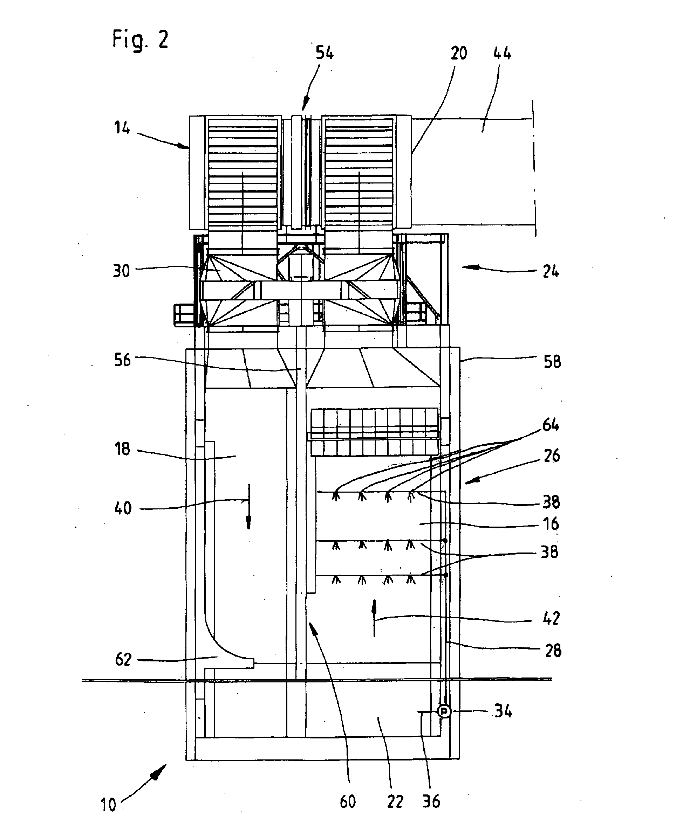

Wie aus den Figuren 1 und 2 ersichtlich, sind der Rauchgaseinlass 14 und ein Rauchgasauslass 20 des Waschturms 10 in einem oberen Bereich 24 des Waschturms 10 angeordnet, so dass sie benachbart zueinander angeordnet sind. Zwischen dem Rauchgaseinlass 14 und dem Rauchgasauslass 20 befindet sich jeweils eine Ventilanordnung 54, die es erlaubt, den Waschturm 10 strömungstechnisch zu umgehen, beispielsweise in einem Störfall des Waschturms 10.

Der Rauchgasauslass 20 ist an einen Verbindungskanal 44 angeschlossen, der seinerseits in einen Zug 48 eines Kamins 32 mündet. Im vorliegenden Fall ist vorgesehen, dass der Kamin 32 für jeden der beiden Anlagenteile einen eigenen Zug 48 aufweist, die jeweils strömungstechnisch voneinander getrennt sind.

In Fig. 1 ist der linke Waschturm 10 im linken Anlagenteil in einer aufgeschnittenen Darstellung ersichtlich. Eine vergrößerte und detaillierte Darstellung des aufgeschnittenen Waschturms zeigt Fig. 2. Danach umfasst der Waschturm 10 einen Reaktionskanal 16 und einen Zuführkanal 18, die aneinandergrenzend parallel zueinander ausgerichtet sind und eine Baueinheit bilden. In einem Umlenkbereich sind die beiden Kanäle 16, 18 über eine Öffnung 60 miteinander verbunden. In der vorliegenden Ausgestaltung sind die beiden Kanäle 16, 18 lediglich durch eine nachträglich in ein Gebäude 58 des Waschturms 10 eingezogene Trennwand 56 voneinander getrennt. Die Trennwand 56 stellt die Öffnung 60 für die strömungstechnische Verbindung der Kanäle 16, 18 bereit. Das Gebäude 58 stellt einen Hohlraum sowohl für den Zuführkanal 18 als auch für den Reaktionskanal 16 bereit. Der Zuführkanal 18 sowie der Reaktionskanal 16 sind vertikal ausgerichtet.

Im oberen Bereich 24 des Waschturms 10 ist zunächst ein Wärmetauscher 30 angeordnet, der einerseits mit einem ersten Kanal an den Zuführkanal 18 und andererseits mit einem zweiten Kanal an dem Reaktionskanal 16 angeschlossen ist. Der erste Kanal des Wärmetauschers 30 ist ferner an den Rauchgaseinlass 14 angeschlossen. Der zweite Kanal des Wärmetauschers 30 ist an den Rauchgasauslass 20 angeschlossen. Im unteren Bereich des Waschturms 10 ist eine Agensvorlage 22 angeordnet, die mit einer Öffnung 60 im unteren Bereich der Trennwand 56 zusammenwirkt und eine strömungstechnische Verbindung zwischen dem Zuführkanal 18 und dem Reaktionskanal 16 bereitstellt.

Dadurch ergibt sich die Strömung für das Rauchgas im Waschturm 10 wie folgt. Das Rauchgas tritt durch den Rauchgaseinlass 14 in den Waschturm 10 ein durchströmt anschließend den ersten Kanal des Wärmetauschers 30, um dann in den Zuführkanal 18 einzumünden. Im Zuführkanal 18 strömt das Rauchgas in Strömungsrichtung 40 nach unten und wird im unteren Bereich des Zuführkanals 18 mittels einer Führung 62 in Richtung der Öffnung 60 umgelenkt, so dass das Rauchgas durch die Öffnung 60 hindurch in den Reaktionskanal 16 einströmt. Wesentlich ist, dass das Rauchgas den Zuführungskanal 18 unbehandelt und im Wesentlichen unverändert durchströmt. Im Umlenkbereich wird das Rauchgas soweit umgelenkt, dass es den Reaktionskanal 16 in Strömungsrichtung 42 durchströmt. Dadurch ergibt sich, dass der Reaktionskanal 16 und der Zuführkanal 18 vom Rauchgas im Wesentlichen entgegengesetzt durchströmt sind.

Das Rauchgas verlässt den Reaktionskanal 16 durch den zweiten Kanal des Wärmetauschers 30 und verlässt den Waschturm 10 durch den Rauchgasauslass 20.

Der Waschturm 10 ist vorliegend durch ein aus Beton hergestelltes Gebäude 58 gebildet, welches Gebäude 58 mittels bekannter bautechnischer Verfahren erstellt worden ist. Hierdurch lässt sich das Gebäude beliebig hinsichtlich der erforderlichen Anlagenleistung angepasst am Betriebsort des Waschturms 10 erstellen.

Wie aus Fig. 2 ersichtlich ist, erfolgt im Zuführkanal 18 keinerlei Behandlung des Rauchgases. Es strömt unverändert durch den Zuführkanal 18. Die Behandlung des Rauchgases erfolgt vielmehr im Reaktionskanal 16. Hierzu weist der Reaktionskanal 16 eine Zuführeinheit 26 für ein Agens auf, welches vorliegend durch eine Calciumcarbonatlösung gebildet ist. Gleichwohl können hier auch andere Lösungen oder auch Seewasser als Agens in Betracht kommen, wie es aus der EP 1 967 253 A1 bekannt ist.

Das mittels der Zuführeinheit 26 dem Reaktionskanal 16 zugeführte Agens durchströmt das Rauchgas und sinkt aufgrund der Gravitationswirkung in den unteren Bereich des Waschturms 10, wo es in der Agensvorlage aufgefangen und gesammelt wird.

Die Zuführeinheit 26 weist Eindüseinheiten 38 auf, von denen in Fig. 2 drei Stück dargestellt sind. Je nach Anlagenleistung und Verfahrensführung können mehr oder weniger Eindüseinheiten 38 vorgesehen sein.

Jede Eindüseinheit 38 weist Düsen 64 auf, mittels denen das Agens in die Rauchgasströmung eingedüst wird. In Fig. 2 sind jeweils vier Düsen 64 für eine Eindüseinheit 38 dargestellt. Die Anzahl und Ausgestaltung der Düsen 64 kann jedoch variieren und entsprechend der Verfahrensführung und der Anlagenleistung angepasst sein. Die Eindüseinheiten 38 sind an eine Zuführleitung 28 angeschlossen, die außerhalb des Reaktionskanals geführt ist. Hierdurch ist sie den aggressiven Reaktionsbedingungen im Reaktionsbereich entzogen und steht darüber hinaus für Wartungszwecke außerhalb des Waschturms 10 jederzeit zur Verfügung. Es ist demnach nicht erforderlich, um die Zuführleitung 28 zu warten beziehungsweise Messungen vorzunehmen, den Waschturm 10 abzuschalten. Die Zuführieitung 28 ist an eine Pumpe 34 angeschlossen, die das Agens aus der Agensvorlage 22 ansaugt und zur Zuführleitung 28 fördert. Das Agens wird somit in einem Kreislauf betrieben. Nicht dargestellt ist, dass ein Teil des Agens abgezweigt und entsorgt wird, wobei entsprechend frisches Agens zugeführt wird.

Besonders vorteilhaft, jedoch in den Figuren nicht ersichtlich, können einzelne Eindüseinheiten 38 seitlich aus dem Reaktionsbereich des Reaktionskanals 16 heraus verfahren werden, beispielsweise um eine Eindüseinheit 38 auszutauschen, um sie zu warten oder andere Maßnahmen vorzunehmen. Die Tatsache, dass die Eindüseinheit 38 leicht ausgewechselt beziehungsweise gewartet werden kann, reduziert den Wartungsaufwand und erhöht zugleich die Sicherheit, weil Arbeiten innerhalb des Reaktionsbereichs reduziert oder sogar vermieden werden können.

Die vorteilhafte Ausgestaltung des Waschturms 10 als dem Grunde nach herkömmliches Gebäude aus Stahlbeton erlaubt es, den Waschturm 10 besonders einfach und kompakt herzustellen und auszubilden. Die besondere Gestaltung der Zuführeinheit 26 ermöglicht es darüber hinaus, bei hoher Kompaktierung eine einfache Wartung des Waschturms 10 zu ermöglichen.

Dem Grunde nach kann der Waschturm 10 natürlich auch mit mehreren Zuführkanälen und Reaktionskanälen versehen sein, wobei vorzugsweise für jeden Reaktionskanal auch ein eigener Zuführkanal vorgesehen sein kann. Besonders vorteilhaft lässt sich eine Verkettung von mehreren aufeinander folgenden Behandlungen des Rauchgases erreichen, indem das einen Reaktionsbereich verlassende Rauchgas über einen weiteren Zuführkanal einem weiteren Reaktionskanal zugeführt wird. Auf diese Weise kann im Gebäude 58 des Waschturms 10 eine mäanderartige Rauchgasführung erreicht werden. Bei hoher Kompaktierung erlaubt dieses Konzept eine außerordentlich hochwertige Reinigungswirkung.

Mittels des Wärmetauschers 30 kann ferner erreicht werden, dass vor der Behandlung des Rauchgases im Reaktionskanal 16 die Temperatur des Rauchgases reduziert wird. Um nachfolgende Verfahrensschritte bezüglich des Rauchgases nicht zu behindern, ist bei der vorliegenden Ausgestaltung vorgesehen, dass wenigstens ein Teil der dem Rauchgas bei Eintritt in den Waschturm 10 mittels des Wärmetauschers 30 entzogenen Wärme dem Rauchgas bei Austritt aus dem Waschturm 10 wieder mittels des Wärmetauschers 30 zugeführt wird. Hierzu stehen die beiden nicht bezeichneten Kanäle des Wärmetauschers 30 miteinander in wärmetechnischer Kopplung. Aufgrund der bekannten Konstruktion derartiger Wärmetauscher wird von weiteren Erläuterungen diesbezüglich abgesehen. Die in dieser Ausgestaltung vorgesehene Anordnung des Wärmetauschers 30 im oberen Bereich 24 des Waschturms 10 erlaubt es darüber hinaus, den Wärmetauscher 30 auf einfache Weise zu warten und gegebenenfalls auszutauschen. Aufgrund dieses Aufbaus ist der Wärmetauscher 30 von außen leicht zugänglich.

Das in den Figuren dargestellte Ausführungsbeispiel dient lediglich der Erläuterung der Erfindung und soll diese nicht beschränken. Selbstverständlich können auch weitere Modifizierungen fachmännischer Art berücksichtigt werden, ohne dass der Kerngedanke der Erfindung aufgegeben wird.

### Bezugszeichenliste

- 10: Waschturm
- 12: Rauchgasreinigungsanlage
- 14: Rauchgaseinlass
- 16: Reaktionskanal
- 18: Zuführkanal
- 20: Rauchgasauslass
- 22: Agensvorlage
- 24: Bereich
- 26: Zuführeinheit
- 28: Zuführleitung
- 30: Wärmetauscher
- 32: Kamin
- 34: Pumpe
- 36: Ansaugstutzen
- 38: Eindüseinheit
- 40: Strömungsrichtung
- 42: Strömungsrichtung
- 44: Verbindungskanal
- 46: Verbindungskanal
- 48: Zug
- 50: Vorreinigung
- 52: Fördereinrichtung
- 54: Ventilanordnung
- 56: Trennwand
- 58: Gebäude
- 60: Öffnung
- 62: Führung
- 64: Düse

## Patentansprüche

1. Waschturm (10) für eine Rauchgasreinigungsanlage (12), mit einem Rauchgaseinlass (14), einem Reaktionskanal (16) zur Reaktion eines Agens mit einem den Reaktionskanal (16) durchströmenden Rauchgas, einen den Rauchgaseinlass (14) strömungstechnisch mit dem Reaktionskanal (16) verbindenden Zuführkanal (18) zum Zuführen des unbehandelten Rauchgases zum Reaktionskanal (16) sowie einem Rauchgasauslass (20),
**dadurch gekennzeichnet,**
**dass** der Reaktionskanal (16) und der Zuführkanal (18) aneinandergrenzend parallel zueinander ausgerichtet sind, wobei der Reaktionskanal (16) und der Zuführkanal (18) strömungstechnisch an einem gemeinsamen Ende über einen Umlenkbereich zur Umlenkung der Strömungsrichtung des Rauchgases miteinander verbunden sind, wobei der Reaktionskanal (16) und der Zuführkanal (18) vom Rauchgas im Wesentlichen entgegengesetzt durchströmt sind.

2. Waschturm nach Anspruch 1, **dadurch gekennzeichnet, dass** im Umlenkbereich der strömungstechnischen Verbindung eine Agensvorlage (22) angeordnet ist.

3. Waschturm nach Anspruch 2, **dadurch gekennzeichnet, dass** die Agensvorlage (22) kanalartig ausgebildet ist.

4. Waschturm nach einem der Ansprüche 1 bis 3, **dadurch gekennzeichnet, dass** der Reaktionskanal (16) und der Zuführkanal (18) im Wesentlichen vertikal ausgerichtet sind.

5. Waschturm nach Anspruch 4, **dadurch gekennzeichnet, dass** der Rauchgaseinlass (14) und der Rauchgasauslass (20) in einem oberen Bereich (24) des Waschturms (10) angeordnet sind.

6. Waschturm nach einem der Ansprüche 1 bis 5, **dadurch gekennzeichnet, dass** ein Strömungsquerschnitt des Zuführkanals (18) im Wesentlichen einem Strömungsquerschnitt des Reaktionskanals (16) entspricht.

7. Waschturm nach einem der Ansprüche 1 bis 6, **gekennzeichnet durch** eine Zuführeinheit (26) zur Zuführung des Agens zum Reaktionskanal (16), die eine außerhalb der Kanäle (16, 18) angeordnete Zuführleitung (28) für das Agens aufweist.

8. Waschturm nach einem der Ansprüche 1 bis 7, **dadurch gekennzeichnet, dass** im Bereich des Rauchgaseinlasses (14) und/oder des Rauchgasauslasses (20) ein Wärmetauscher (30) angeordnet ist.

9. Waschturm nach Anspruch 8, **dadurch gekennzeichnet, dass** der Wärmetauscher (30) an die Zuführleitung (28) angeschlossen ist.

10. Waschturm nach einem der Ansprüche 1 bis 9, **dadurch gekennzeichnet, dass** der Waschturm (10) aus Beton, insbesondere Stahlbeton gebildet ist.

11. Waschturm nach einem der Ansprüche 1 bis 9, **dadurch gekennzeichnet, dass** der Waschturm (10), der Zuführkanal (18) und/oder der Reaktionskanal (16) einen rechteckigen Querschnitt aufweisen.

12. Rauchgasreinigungsanlage (12) mit einem Waschturm (10) nach einem der vorhergehenden Ansprüche.

## Geänderte Patentansprüche

### Geänderte Patentansprüche gemäss Regel 137(2) EPÜ.

**1.** Waschturm (10) für eine Rauchgasreinigungsanlage (12), mit einem Rauchgaseinlass (14), einem Reaktionskanal (16) zur Reaktion eines Agens mit einem den Reaktionskanal (16) durchströmenden Rauchgas, einen den Rauchgaseinlass (14) strömungstechnisch mit dem Reaktionskanal (16) verbindenden Zuführkanal (18) zum Zuführen des unbehandelten Rauchgases zum Reaktionskanal (16) sowie einem Rauchgasauslass (20), wobei der Zuführkanal rauchgasbehandlungseinrichtungsfrei ausgebildet ist
**dadurch gekennzeichnet,**
**dass** der Reaktionskanal (16) und der Zuführkanal (18) aneinandergrenzend parallel zueinander ausgerichtet sind, wobei der Reaktionskanal (16) und der Zuführkanal (18) strömungstechnisch an einem gemeinsamen Ende über einen Umlenkbereich zur Umlenkung der Strömungsrichtung des Rauchgases miteinander verbunden sind, wobei der Reaktionskanal (16) und der Zuführkanal (18) vom Rauchgas im Wesentlichen entgegengesetzt durchströmt sind.

**2.** Waschturm nach Anspruch 1, **dadurch gekennzeichnet, dass** im Umlenkbereich der strömungstechnischen Verbindung eine Agensvorlage (22) angeordnet ist.

**3.** Waschturm nach Anspruch 2, **dadurch gekennzeichnet, dass** die Agensvorlage (22) kanalartig ausgebildet ist.

**4.** Waschturm nach einem der Ansprüche 1 bis 3, **dadurch gekennzeichnet, dass** der Reaktionskanal (16) und der Zuführkanal (18) im Wesentlichen vertikal ausgerichtet sind.

**5.** Waschturm nach Anspruch 4, **dadurch gekennzeichnet, dass** der Rauchgaseinlass (14) und der Rauchgasauslass (20) in einem oberen Bereich (24) des Waschturms (10) angeordnet sind.

**6.** Waschturm nach einem der Ansprüche 1 bis 5, **dadurch gekennzeichnet, dass** ein Strömungsquerschnitt des Zuführkanals (18) im Wesentlichen einem Strömungsquerschnitt des Reaktionskanals (16) entspricht.

**7.** Waschturm nach einem der Ansprüche 1 bis 6, **gekennzeichnet durch** eine Zuführeinheit (26) zur Zuführung des Agens zum Reaktionskanal (16), die eine außerhalb der Kanäle (16, 18) angeordnete Zuführleitung (28) für das Agens aufweist.

**8.** Waschturm nach einem der Ansprüche 1 bis 7, **dadurch gekennzeichnet, dass** im Bereich des Rauchgaseinlasses (14) und/oder des Rauchgasauslasses (20) ein Wärmetauscher (30) angeordnet ist.

**9.** Waschturm nach Anspruch 8, **dadurch gekennzeichnet, dass** der Wärmetauscher (30) an die Zuführleitung (28) angeschlossen ist.

**10.** Waschturm nach einem der Ansprüche 1 bis 9, **dadurch gekennzeichnet, dass** der Waschturm (10) aus Beton, insbesondere Stahlbeton gebildet ist.

**11.** Waschturm nach einem der Ansprüche 1 bis 9, **dadurch gekennzeichnet, dass** der Waschturm (10), der Zuführkanal (18) und/oder der Reaktionskanal (16) einen rechteckigen Querschnitt aufweisen.

**12.** Rauchgasreinigungsanlage (12) mit einem Waschturm (10) nach einem der vorhergehenden Ansprüche.

**13.** Verfahren zum Betrieb eines Waschturms nach einem der Ansprüche 1 bis 11, **dadurch gekennzeichnet, dass** im Zuführkanal keine Behandlung des Rauchgas durchgeführt wird.
